**Europäisches Patentamt**

**European Patent Office**

**Office européen des brevets**

(19)

(11) Publication number: **0 230 468**
**B1**

(12)

# EUROPEAN PATENT SPECIFICATION

(45) Date of publication of patent specification: **17.05.89**

(51) Int. Cl.⁴: **B 60 K 15/04,** B 65 D 51/00

(21) Application number: **86904888.4**

(22) Date of filing: **18.08.86**

(86) International application number:
**PCT/GB86/00489**

(87) International publication number:
**WO 87/01340 12.03.87 Gazette 87/06**

(54) **Motor vehicle having a fuel tank.**

(30) Priority: **28.08.85 GB 8521398**

(43) Date of publication of application:
**05.08.87 Bulletin 87/32**

(45) Publication of the grant of the patent:
**17.05.89 Bulletin 89/20**

(84) Designated Contracting States:
**AT BE CH DE FR GB IT LI LU NL SE**

(56) References cited:
**EP-A-0 096 604**
**DE-A-2 835 603**
**DE-A-3 118 267**
**FR-A-2 538 785**
**GB-A- 728 648**
**US-A-2 893 233**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **FORD MOTOR COMPANY LIMITED**
**Eagle Way**
**Brentwood Essex CM13 3BW (GB)**
(84) **BE CH GB IT LI LU NL SE AT**

(72) Inventor: **PARDY, Ronald**
**159 Maldon Road Tiptree**
**Essex (GB)**

(74) Representative: **Messulam, Alec Moses et al**
**A. Messulam & Co. 24 Broadway**
**Leigh on Sea Essex SS9 1BN (GB)**

Courier Press, Leamington Spa, England.

# Description

The present invention relates to a motor vehicle having a fuel tank of which the mouth of the filler spout is arranged in a recess in the vehicle body, a lockable filler cap to fit over the mouth of the filler spout, and a cover plate for closing the recess and pivotable between a closed position in which it lies flush with the vehicle body and a second position in which access may be gained to the lock mechanism of the filler cap.

It is known to place the filler cap of a motor vehicle in a recess covered by a plate hinged on the vehicle body and which is painted to match the remainder of the vehicle body. In this way the appearance of the vehicle is not marred by the filler cap. However, such a construction is relatively costly and for this reason it is only to be found on more expensive vehicles.

The invention seeks to provide a filler cap which can blend in with the vehicle body but can be manufactured with less expense.

According to the invention, there is provided a motor vehicle having a fuel tank of which the mouth of the filler spout is arranged in a recess in the vehicle body, a lockable filler cap to fit over the mouth of the filler spout, and a cover plate for closing the recess and pivotable between a closed position in which it lies flush with the vehicle body and a second position in which access may be gained to the lock mechanism of the filler cap, characterised in that the cap can be locked onto the mouth of the filler spout by rotation of the lock mechanism only and without rotation of the body of the cap relative to the filler spout, and in that the cover plate is pivotably mounted on the body of the filler cap.

In the invention, the decorative cover plate which lies flush with the vehicle bodywork and may be painted to match, is pivotably secured to the filler cap rather than to the vehicle body. In this way, the same aesthetic appeal may be obtained but with reduced expense.

There is known from US Patent No. 2,893,233 a filler cap which carries a pivotable plate to cover only the lock mechanism of the filler cap. This cover does not even cover the area of the filler cap, let alone the recess in which the filler cap is locate. Furthermore, in this patent, the whole of the filler cap must be turned to mount it on the mouth of the filler spout and if a larger cover were substituted for the lock cover, then it would risk collision with the walls of the recess at the cap is rotated.

The invention will now be described further, by way of example, with reference to the accompanying drawings, in which:

Figure 1 is a side view of a filler cap fitted to the fuel spout of a motor vehicle with the cover plate shown in two different positions, and

Figure 2 is a view in the direction of arrow II in Figure 1 with the cover plate open.

The filler cap 10 in the drawings has a body 12 which fits over a fuel body spout 16. The body 12 is not, as in some known constructions, rotatable relative to the spout 16 but instead has a key operated lock mechanism 14 which can rotate relative to the body 12 to lock the body 12 to the filler spout 16. The body 12 and lock mechanism 14 are conventional and need not therefore be described in detail but it is noted that the orientation of the filler cap 10 relative to the spout 16 and thus relative to the vehicle body is predetermined.

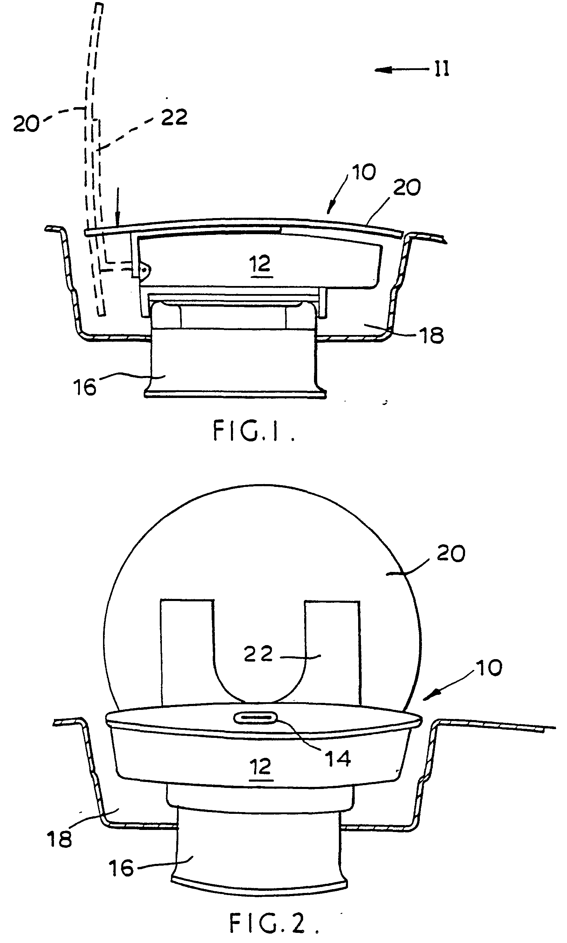

In order to cover the recess 18 in which the spout 16 is located, a decorative cover plate 20 is pivotably mounted on the body 12 by means of a hinge 22. In Figure 1, the cover plate 20 is shown in solid lines in its open position and in dotted lines in its closed position. It will be seen that in the open position access may be gained to the lock mechanism so that the latter may be rotated by key to permit the filler cap 10 to be removed from the spout 16, complete with the cover plate 20. In the closed position, on the other hand, the cover plate 20 lies flush with the vehicle body to cover the recess 18 and give the same appearance as a vehicle in which a cover is hinged onto the vehicle body for the purpose of disguising the filler spout recess.

The hinge 22 is L-shaped and has resilient limbs which snap resiliently over a corner of the body 10. In this way, the resilience of the hinge 22 suffices to keep the cover plate closed, without rattling. To uncover the lock mechanism, pressure is applied by finger to the cover plate 20 at a point P adjacent the hinge 22, the resilience of the hinge now keeping the cover plate 20 away from the lock mechanism 14.

# Claims

1. A motor vehicle having a fuel tank of which the mouth of the filler spout (16) is arranged in a recess (18) in the vehicle body, a lockable filler cap (10) to fit over the mouth of the filler spout (16), and a cover plate (20) for closing the recess (18) and pivotable between a closed position in which it lies flush with the vehicle body and a second position in which access may be gained to the lock mechanism (14) of the filler cap (10), characterised in that the cap (10) can be locked onto the mouth of the filler spout (16) by rotation of the lock mechanism (14) only and without rotation of the body (12) of the cap (10) relative to the filler spout (16), and in that the cover plate (20) is pivotably mounted on the body (12) of the filler cap (10).

2. A motor vehicle as claimed in claim 1, wherein the cover plate (20) is pivotably mounted on the filler cap (12) by means of an L-shaped hinge (22) with resilient limbs and which in use snaps into position over a corner of the body of the filler cap (12).

# Patentansprüche

1. Kraftfahrzeug mit einem Kraftstofftank, dessen Mündung der Betankungsöffnung (16) in einer Ausnehmung (18) in der Fahrzeugkarosserie angeordnet ist, einem abschliessbaren Tankdeckel (10), der über die Mündung der Betankungsöffnung (16) passt, und einer Deckplatte (20) zum Schliessen der Ausnehmung (18) und die zwischen einer geschlossenen Stellung, in der sie mit der Fahrzeugkarosserie fluchtet, und einer zweiten Stellung, in der Zugang zum Schlossmechanismus (14) des Tankdeckels (10) gewonnen werden kann, schwenkbar ist, dadurch gekennzeichnet, dass der Deckel (10) nur durch Drehung des Schlossmechanismuses (14) und ohne Drehung des Körpers (12) des Dekkels (10) relativ zur Betankungsöffnung (16) an der Mündung der Betankungsöffnung (16) abgeschlossen werden kann, und dass die Deckplatte (20) schwenkbar am Körper (12) des Tankdeckels (10) befestigt ist.

2. Kraftfahrzeug nach Anspruch 1, dadurch gekennzeichnet, dass die Deckplatte (20) mittels eines L-förmigen Scharniers (22) mit elastischen Schenkeln und das im Gebrauch über eine Ecke des Körpers des Tankdeckels (12) einschnappt, schwenkbar am Tankdeckel (12) befestigt ist.

**Revendications**

1. Véhicule automobile comprenant un réservoir de carburant dont la bouche de la goulotte de remplissage (16) est logée dans une niche (18) de la carrosserie du véhicule, un bouchon de remplissage verrouillable (10) qui se monte sur la bouche de la goulotte de remplissage (16) et une plaque de recouvrement (20) destinée à fermer la niche (18) et qu'on peut faire pivoter d'une position fermée, dans laquelle elle se trouve dans le même plan que la carrosserie du véhicule, et une deuxiéme position, dans laquelle elle donne accés au mécanisme de verrouillage (14) du bouchon de remplissage (10), caractérisé en ce que le bouchon (10) peut être verrouillé sur la bouche de la goulotte de remplissage (16) par rotation du seul mécanisme de verrouillage (14) et sans rotation du corps (12) du bouchon (10) par rapport à la goulotte de remplissage (16), et en ce que la plaque de recouvrement (20) est articulée sur le corps (12) du bouchon de remplissage (10).

2. Véhicule automobile selon la revendication 1, dans lequel la plaque de recouvrement (20) est articulée sur le bouchon de remplissage (12) au moyen d'une charnière en forme de L (22) possédant des branches élastiques et qui, en fonctionnement, bascule élastiquement sur une arête du corps du bouchon de remplissage (12) pour prendre sa position.

FIG.1.

FIG.2.

1